# EUROPÄISCHE PATENTSCHRIFT

(11) **EP 3 194 268 B1**
(45) Veröffentlichungstag und Bekanntmachung des Hinweises auf die Patenterteilung: **05.12.2018**
(21) Anmeldenummer: 15766780.9
(22) Anmeldetag: 16.09.2015
(51) Int. Cl.: B64D 11/06

(54) **SITZVORRICHTUNG**
SEAT DEVICE
ENSEMBLE SIÈGE

(30) Priorität: 16.09.2014 DE 102014113345
(43) Veröffentlichungstag der Anmeldung: 26.07.2017
(73) Patentinhaber: Recaro Aircraft Seating GmbH & Co. KG, 74523 Schwäbisch Hall (DE)
(72) Erfinder: BICH, Christoph, 73453 Abtsgmünd (DE); LOISCH, Felix, 70197 Stuttgart (DE); GÄRTNER, André, 74523 Schwäbisch-Hall (DE)
(74) Vertreter: Daub, Thomas
(86) Internationale Anmeldenummer: PCT/EP2015/071145
(87) Internationale Veröffentlichungsnummer: WO 2016/041999

(56) Entgegenhaltungen:
- DE-A1-102013 015 008
- DE-U1-202012 100 140
- US-A1- 2003 107 210

## Beschreibung

### Stand der Technik

Die Erfindung betrifft eine Sitzvorrichtung nach dem Oberbegriff des Patentanspruchs 1. Es ist bereits eine Sitzvorrichtung mit einem Sitz, insbesondere einem Fluggastsitz, mit einem Sitzgurt und mit wenigstens einer von einer Funktionsöffnungs- und Schließeinheit des Gurts differierenden Funktionseinheit vorgeschlagen worden. Dokument DE102013015008 offenbart eine Sitzvorrichtung gemäß dem Oberbegriff des Anspruchs 1.

Die Aufgabe der Erfindung besteht insbesondere darin, eine gattungsgemäße Vorrichtung mit verbesserten Eigenschaften hinsichtlich eines Komforts und einer einfachen Bedienbarkeit für einen Passagier und einer vorteilhaft einfachen Ausgestaltung eines Sitzes bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Sitzvorrichtung mit einem Sitz, insbesondere einem Fluggastsitz, mit einem Sitzgurt und mit wenigstens einer zumindest im Wesentlichen von einer Funktionsöffnungs- und Schließeinheit des Gurts differierenden Funktionseinheit. Es wird vorgeschlagen, dass die wenigstens eine Funktionseinheit zumindest an den Sitzgurt angebunden und/oder zumindest teilweise in diesen integriert ist. Unter einem "Fluggastsitz" soll dabei insbesondere ein Sitz verstanden werden, der dazu vorgesehen ist, in einer Flugzeugkabine eines Flugzeugs auf einem Kabinenboden aufgeständert zu werden und auf dem ein Passagier während eines Flugs sitzen kann. Dabei weist der Fluggastsitz einen Sitzboden und eine mit dem Sitzboden gekoppelte Rückenlehne auf, wobei die Rückenlehne vorzugsweise verschwenkbar mit dem Sitzboden verbunden ist, wodurch der Fluggastsitz vorzugsweise in unterschiedliche Funktionsstellungen bewegbar ist. Unter einer "Sitzboden" soll dabei insbesondere ein Element verstanden werden, das eine Sitzfläche des Fluggastsitzes ausbildet und auf dem der Passagier während eines Flugs sitzt, wobei der Sitzboden dabei vorzugsweise wenigstens eine Polstereinheit aufweist, die die Sitzfläche elastisch polstert. Unter einem "Sitzgurt" soll dabei insbesondere ein Rückhaltesystem an einem Sitz verstanden werden, wobei auf ein auf dem Sitz sitzender Passagier, der mittels des Sitzgurts an den Sitz angeschnallt ist, im Falle von Beschleunigungen, die auf das Flugzeug wirken, beispielsweise während Turbulenzen oder einem Crashfall, auf dem Sitz gehalten wird und nicht durch das Flugzeug geschleudert wird. Dabei ist der Sitzgurt mit einer tragenden Struktur des Sitzes verbunden. Der Sitzgurt weist dabei vorzugsweise eine Trennstelle auf, an der der Sitzgurt geöffnet werden kann. Die Trennstelle ist von einer Funktionsöffnungs- und Schließeinheit gebildet, über die zwei Seiten des Sitzgurts trennbar miteinander verbunden sind. Dabei ist der Sitzgurt vorzugsweise aus einem Gewebematerial, das eine hohe Reißfestigkeit aufweist, gebildet. Grundsätzlich ist es auch denkbar, dass der Sitzgurt als ein anderes, dem Fachmann als sinnvoll erscheinendes Rückhaltesystem ausgebildet ist, wie beispielsweise als ein verschwenkbarer Bügel, der in einer Gebrauchsstellung verriegelt werden kann und einen Passagier so auf dem Sitz sichert. Unter einer "Funktionsöffnungs- und Schließeinheit" soll dabei insbesondere eine Einheit verstanden werden, die aus zumindest einem ersten, mit einer ersten Seite des Sitzgurts verbundenen Verbindungselement und einem zweiten, mit einer zweiten Seite des Sitzgurts verbundenen Verbindungselement gebildet ist, wobei die beiden Verbindungselemente von einem Passagier händisch fest miteinander gekoppelt und auch wieder voneinander getrennt werden können. In einem verbundenen Zustand kann über die Verbindungselemente eine große Kraft übertragen werden, sodass ein Passagier selbst bei großen Beschleunigungen von dem Sitzgurt auf dem Sitz gehalten wird. Unter einer "Funktionseinheit" soll dabei insbesondere eine Einheit aus einem oder mehreren Elementen verstanden werden, die zur Ausführung und/oder Bereitstellung einer Funktion des Sitzes vorgesehen ist. Dabei ist es sowohl denkbar, dass über die Funktionseinheit eine Funktion des Sitzes bedient wird oder dass die Funktionseinheit selbst eine Funktion des Sitzes oder eine Funktion für den Sitz ausbildet. Darunter, dass "die Funktionseinheit zumindest im Wesentlichen von der Funktionsöffnungs- und Schließeinheit differiert", soll dabei insbesondere verstanden werden, dass die Funktionseinheit im Wesentlichen nicht zu einer Öffnungsfunktion oder einer Schließfunktion der Funktionsöffnungs- und Schließeinheit beiträgt. Dabei ist die Funktionseinheit insbesondere nicht zu einer Verbindung von zwei Seiten des Sitzgurts vorgesehen. Dabei wäre es grundsätzlich denkbar, dass zumindest ein Teil der Funktionseinheit an die Funktionsöffnungs- und Schließeinheit angebunden ist. Unter "angebunden" soll dabei insbesondere starr und fest oder verschiebbar mit einem Element, wie insbesondere mit dem Sitzgurt, verbunden verstanden werden, wobei dabei insbesondere direkt mit dem Element, wie insbesondere mit dem Sitzgurt verbunden gemeint ist. Dabei kann ein Element lösbar oder zerstörungsfrei unlösbar mit dem Sitzgurt verbunden sein. Dabei kann ein Element, wie insbesondere die Funktionseinheit, formschlüssig, kraftschlüssig und/oder stoffschlüssig an den Sitzgurt angebunden, also mit ihm verbunden sein. Vorzugsweise ist ein Element, wie insbesondere die Funktionseinheit direkt mit dem Sitzgurt verbunden, wobei die Funktionseinheit zusammen mit dem Sitzgurt, dabei vorzugsweise beweglich zu anderen Elementen der Sitzvorrichtung, wie beispielsweise einer Rückenlehne oder einer Armlehne angeordnet ist. Unter "zumindest teilweise integriert" soll dabei insbesondere verstanden werden, dass wenigstens ein Teil der Funktionseinheit einstückig mit dem Sitzgurt ausgebildet ist und/oder innerhalb des Sitzgurts aufgenommen ist. Dabei ist es denkbar, dass ein komplettes Bauteil der Funktionseinheit oder auch nur ein Teil eines Bauteils der Funktionseinheit in den Sitzgurt integriert ist. Dadurch kann eine Funktion des Sitzes vorteilhaft an den Sitzgurt angebracht und/oder in diesen integriert werden, wodurch insbesondere auch Bauteile, in denen eine Funktionseinheit im Stand der Technik vornehmlich angeordnet ist, wie insbesondere eine Armlehne, vorteilhaft einfacher und platzsparender ausgebildet werden können. Durch eine erfindungsgemäße Ausgestaltung kann vorteilhaft ein Sitz bereitgestellt werden, der einen besonders vorteilhaften Komfort und eine besonders ergonomische Bedienung für einen Passagier bereitstellt und weiterhin vorteilhaft einfach ausgebildet werden kann.

Weiter wird vorgeschlagen, dass die wenigstens eine Funktionseinheit als eine Bedieneinheit ausgebildet ist, die wenigstens ein Bedienelement umfasst. Unter einer "Bedieneinheit" soll dabei insbesondere eine Einheit verstanden werden, die zum Bedienen eines Elements oder einer Vorrichtung, insbesondere zum Bedienen eines Elements oder einer Vorrichtung des Sitzes, vorgesehen ist. Unter einem "Bedienelement" soll insbesondere ein Element verstanden werden, das dazu vorgesehen ist, bei einem Bedienvorgang eine Eingabegröße von einem Bediener aufzunehmen und insbesondere unmittelbar von einem Bediener kontaktiert zu werden, wobei ein Berühren des Bedienelements sensiert wird und/oder eine auf das Bedienelement ausgeübte Betätigungskraft sensiert und/oder mechanisch zur Betätigung einer Einheit weitergeleitet wird. Dabei ist das Bedienelement vorzugsweise als ein Druckknopf, der von einer Seite aus durch Aufbringen eines Drucks bedienbar ist, ausgebildet. Grundsätzlich ist es auch denkbar, dass das Bedienelement als ein Druckknopf ausgebildet ist, der durch Druckbeaufschlagung von zwei Seiten, also durch Zusammendrücken, bedienbar ist. Grundsätzlich ist es ebenso denkbar, dass das Bedienelement als ein Drehelement ausgebildet ist, das durch Beaufschlagung mit einem Moment bedienbar ist und bei einem Bedienvorgang verdreht wird. Dadurch kann die Funktionseinheit besonders vorteilhaft ausgebildet werden.

Zudem wird vorgeschlagen, dass die wenigstens eine Funktionseinheit eine Haltevorrichtung aufweist, die die Funktionseinheit an den Sitzgurt anbindet. Unter einer "Haltevorrichtung" soll dabei insbesondere eine Vorrichtung verstanden werden, die mit dem Sitzgurt gekoppelt ist und die zumindest in einem voll montierten Zustand mit dem Bedienelement form-, kraft- und/oder stoffschlüssig verbunden ist. Dadurch kann die Funktionseinnheit vorteilhaft an den Sitzgurt angebunden werden.

Es wird weiter vorgeschlagen, dass die Haltevorrichtung verschiebbar mit dem Sitzgurt verbunden ist. Unter "verschiebbar verbunden" soll dabei insbesondere verstanden werden, dass die Haltevorrichtung entlang des Sitzgurts verschiebbar ist. Dadurch kann die Haltevorrichtung - und dadurch das Bedienelement - vorteilhaft von einem Passagier entlang des Sitzgurts verschoben werden und dadurch an eine von ihm gewünschte Position gebracht werden, an dem das Bedienelement vorteilhaft bedient werden kann oder beispielsweise nicht stört.

Weiterhin wird vorgeschlagen, dass die Haltevorrichtung an einer fixen Seite des Sitzgurts angeordnet ist. Unter einer "fixen Seite des Sitzgurts" soll dabei insbesondere eine Seite des zumindest zweiteiligen Sitzgurts verstanden werden, die in ihrer Länge zwischen einem an dem Sitz befestigten Ende und einem Ende, an dem ein Verbindungselement des Sitzgurts fest angebracht ist, nicht veränderbar ist. Der Sitzgurt weist dabei eine variable Seite auf, die auf einer Seite des Sitzes fest angebunden ist, die einer Seite, auf der die feste Seite des Sitzgurts angebunden ist, gegenüberliegt und deren Länge zwischen dem fest mit dem Sitz verbundenen Ende und einem Verbindungselement, das zur Kopplung mit dem Verbindungselement der fixen Seite vorgesehen ist, veränderbar ist, um an verschieden große Passagiere angepasst werden zu können. Dadurch kann eine besonders einfache Anbindung der Haltevorrichtung und insbesondere des Bedienelements an den Sitzgurt erreicht werden, da während eines Betriebs nicht auf eine Verstellung einer Gurtlänge geachtet werden muss.

Ferner wird vorgeschlagen, dass die Haltevorrichtung fix an dem Sitzgurt angebunden ist. Unter "fix an dem Sitzgurt angebunden" soll dabei insbesondere verstanden werden, dass die Haltevorrichtung ortsfest an Sitzgurt angebunden ist und nicht zu dem Sitzgurt verschoben werden kann. Dadurch kann die Haltevorrichtung besonders vorteilhaft ausgebildet werden.

Außerdem wird vorgeschlagen, dass die wenigstens eine Funktionseinheit wenigstens ein Übertragungselement zur Kopplung des Bedienelements mit einem auszulösenden Element aufweist, das mit dem Sitzgurt gekoppelt ist. Unter einem "Übertragungselement" soll dabei insbesondere ein Element verstanden werden, das zur Übertragung eines Bediensignals und/oder einer Bedienkraft vorgesehen ist, das oder die von dem Bedienelement ausgeht und zur Betätigung eines auszulösenden Elements vorgesehen ist. Dabei kann es sich bei einem Übertragungselement um ein Element zur Übertragung von elektrischen und/oder elektronischen Signalen, wie insbesondere um ein Kabel, handeln, oder um ein Element zur Übertragung einer Kraft und/oder Bewegung, wie insbesondere um einen Bowdenzug. Erfindungsgemäß wird die Übertragung der Kraft und/oder Bewegung vorgesehen. Grundsätzlich ist es dabei auch denkbar, dass das Übertragungselement aus anderen Materialien gebildet ist, wie beispielsweise aus Textilien, aus Karbonfasern, anders ausgebildeten Natur- oder Kunststofffasern sowie Verbundwerkstoffen. Unter einer "Kopplung des Bedienelements mit einem auszulösenden Element" soll dabei insbesondere eine Verbindung zwischen dem Bedienelement und dem auszulösendem Element verstanden werden, über die eine etwaige Betätigung des Bedienelements an das auszulösende Element übertragen wird und eine entsprechende Reaktion auslöst und/oder ausführt. Unter einem "auszulösenden Element" soll dabei insbesondere ein Element verstanden werden, das von einem Bediener über das Bedienelement bedient werden kann, wie beispielsweise eine Elektronik eines Sitzes, eine Sitzverstellung oder andere, dem Fachmann als sinnvoll erscheinende Elemente oder Vorrichtungen eines Sitzes, insbesondere eines Fluggastsitzes. Dadurch kann eine Übertragung von dem Bedienelement zu dem auszulösenden Element besonders vorteilhaft geschehen und das Übertragungselement dabei vorteilhaft und nicht störend in den Sitz integriert werden. Des Weiteren wird vorgeschlagen, dass die wenigstens eine Funktionseinheit wenigstens eine Führung aufweist, die das Übertragungselement an den Sitzgurt anbindet. Unter einer "Führung" soll dabei insbesondere eine Führung verstanden werden, in der ein Übertragungselement, wie beispielsweise ein Bowdenzug oder ein Kabel zumindest teilweise aufgenommen ist, wobei es grundsätzlich denkbar ist, dass das Übertragungselement in Umfangsrichtung nur teilweise von der Führung umschlossen ist oder dass das Übertragungselement in Umfangsrichtung komplett von der Führung umhüllt ist. Dabei ist das Übertragungselement vorzugsweise über eine gesamte Länge zwischen dem Betätigungselement und dem auszulösenden Element von der Führung aufgenommen. Dadurch kann das Übertragungselement vorteilhaft und einfach an den Sitzgurt angebunden werden.

Weiter wird vorgeschlagen, dass die Führung als ein von dem Sitzgurt getrennt ausgebildetes Führungselement ausgebildet ist, das an den Sitzgurt angebunden ist. Unter einem "getrennt von dem Sitzgurt ausgebildeten Führungselement" soll dabei insbesondere ein Führungselement verstanden werden, das separat von dem Sitzgurt ausgebildet ist, wie beispielsweise eine Plastikröhre, und außen an den Sitzgurt anbindbar ist. Dabei ist es denkbar, dass das Führungselement teilweise an den Sitzgurt angebunden ist und beispielsweise über Rastelemente an den Sitzgurt anklipsbar ist oder über andere, dem Fachmann als sinnvoll erscheinende Arten an den Sitzgurt gekoppelt ist. Dadurch kann vorteilhaft eine günstige und vorteilhaft nachrüstbare Führung erreicht werden.

Zudem wird vorgeschlagen, dass die Führung als in den Sitzgurt integriertes Führungselement ausgebildet ist. Unter einem "in den Sitzgurt integrierten Führungselement" soll dabei insbesondere ein Führungselement verstanden werden, welches insbesondere einstückig mit dem Sitzgurt ausgebildet ist, insbesondere als ein von dem Sitzgurt ausgebildeter Hohlraum. Dadurch kann die Führung besonders vorteilhaft und nicht störend für einen Passagier ausgebildet werden.

Es wird weiter vorgeschlagen, dass das Bedienelement als ein Zugelement ausgebildet ist. Unter einem "Zugelement" soll dabei insbesondere ein Element verstanden werden, an dem zur Betätigung von einem Bediener gezogen werden muss, um ein Betätigungssignal und/oder eine Betätigungskraft weiterzugeben. Dadurch kann das Bedienelement besonders einfach und für einen Passagier besonders einfach und intuitiv zu bedienen ausgebildet werden.

Weiterhin wird vorgeschlagen, dass das Bedienelement als ein mechanischer Druckknopf ausgebildet ist. Unter einem "mechanischen Druckknopf" soll dabei insbesondere ein Druckknopf verstanden werden, der durch Betätigen, also durch auf eine Betätigungsfläche des Bedienelements wirkende Druckkraft, ein mechanisches Betätigungssignal, wie insbesondere eine Kraft zur Betätigung eines auszulösenden Elements, weitergibt. Dadurch kann ein besonders vorteilhaftes und einfaches Bedienelement bereitgestellt werden und mechanische Komponenten des Sitzes können mittels der Funktionseinheit betätigt werden.

Ferner wird als nicht Teil der Erfindung vorgeschlagen, dass das Bedienelement als ein elektrisches Bedienelement ausgebildet ist. Unter einem "elektrischen Bedienelement" soll dabei insbesondere ein Bedienelement verstanden werden, das bei Betätigung durch einen Bediener ein elektrisches und/oder elektronisches Signal zur Bedienung eines elektrischen und/oder elektronischen Bauteils ausgibt und/oder moduliert. Dadurch kann vorteilhaft eine Elektronik des Sitzes mit der Funktionseinheit gesteuert werden.

Außerdem wird vorgeschlagen, dass der Sitzgurt das Bedienelement und das Übertragungselement einstückig ausbildet und zur Auslösung eines Federelements zur Sitzverstellung vorgesehen ist. Unter einem "Federelement zur Sitzverstellung" soll dabei insbesondere ein Federelement, wie insbesondere eine einstellbare Gasdruckfeder, verstanden werden, die in zumindest einem Zustand, insbesondere einem unbetätigten Zustand, den Sitz in einer Sitzposition verriegelt und in einem betätigten Zustand entriegelt, wodurch der Sitz dabei von einem Passagier in seiner Sitzposition verstellt werden kann. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Sitzverstellung" soll dabei insbesondere eine Verstellung des Sitzes zwischen einer TTL- und einer Komfortposition verstanden werden, wobei die eine Sitzverstellung grundsätzlich auch eine Verstellung einer Beinauflage beinhalten kann. Dadurch kann eine Sitzverstellung besonders einfach und ohne zusätzliche Elemente realisiert werden.

Des Weiteren wird vorgeschlagen, dass das Bedienelement zur Betätigung einer Sitzverstellung vorgesehen ist. Unter "zur Betätigung einer Sitzverstellung" soll dabei insbesondere verstanden werden, dass über eine Betätigung des Bedienelements eine Verstellmechanik, mittels der eine Sitzverstellung vorgenommen wird, betätigt werden kann. Dadurch kann ein Bedienelement zur Verstellung der Rückenlehne vorteilhaft in den Sitzgurt integriert beziehungsweise an diesen angebunden werden, wodurch insbesondere eine Armlehne, in der das entsprechende Bedienelement im Stand der Technik vorzugsweise angeordnet ist, leichter und vorteilhaft kleiner ausgebildet werden kann.

Weiter wird vorgeschlagen, dass die Funktionseinheit wenigstens ein Steckerelement umfasst. Unter einem "Steckerelement" soll dabei insbesondere ein Element verstanden werden, das mit einem anderen Steckerelement verbindbar ist und zum Anschluss eines Geräts, wie insbesondere eines Eingabe-, Ausgabe- oder Speichergeräts, vorgesehen ist. Ein anschließbares Gerät kann dabei beispielsweise als ein Kopfhörer oder als ein USB-Speicherstick ausgebildet sein. Das Steckerelement kann dabei je nach anzuschließendem Gerät beispielsweise als ein USB-Stecker, als ein 3,5 mm Klinkestecker oder als ein anderes, dem Fachmann als sinnvoll erscheinendes Steckerelement ausgebildet sein. Dadurch kann ein Passagier über die Funktionseinheit vorteilhaft und einfach weitere Geräte an den Sitz anbinden.

Zudem wird vorgeschlagen, dass die Funktionseinheit wenigstens ein Stauelement umfasst. Unter einem "Stauelement" soll dabei insbesondere ein Aufbewahrungselement verstanden werden, in dem ein Passagier Utensilien, vorzugsweise kleinere Utensilien, wie beispielsweise ein Smartphone oder einen MP3-Player, verstauen kann. Dabei kann ein Stauelement beispielsweise als ein verschließbarer Beutel ausgebildet sein, der beispielsweise aus einem Stoff gebildet ist. Dadurch können über die Funktionseinheit vorteilhaft Elemente in oder an dem Sitzgurt verstaut werden.

Die erfindungsgemäße Sitzvorrichtung soll hierbei nicht auf die oben beschriebene Anwendung und Ausführungsform beschränkt sein. Insbesondere kann die erfindungsgemäße Sitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind sechs Ausführungsbeispiele der Erfindung dargestellt. Die Zeichnungen, die

Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Sitzvorrichtung mit einem Sitz in einer Sitzreihe,
- Fig. 2: eine schematische Darstellung eines Sitzgurts der erfindungsgemäßen Sitzvorrichtung,
- Fig. 3: eine schematische Darstellung einer erfindungsgemäßen Sitzvorrichtung in einem zweiten Ausführungsbeispiel,
- Fig. 4: eine schematische Darstellung einer erfindungsgemäßen Sitzvorrichtung in einem dritten Ausführungsbeispiel,
- Fig. 5: eine schematische Darstellung einer erfindungsgemäßen Sitzvorrichtung in einem vierten Ausführungsbeispiel,
- Fig. 6: eine schematische Darstellung einer Sitzvorrichtung in einem fünften Ausführungsbeispiel das nicht Teil der Erfindung ist
- Fig. 7: eine schematische Darstellung einer erfindungsgemäßen Sitzvorrichtung in einem sechsten Ausführungsbeispiel und
- Fig. 8: eine schematische Darstellung einer erfindungsgemäßen Sitzvorrichtung in einem siebten Ausführungsbeispiel.

### Beschreibung der Ausführungsbeispiele

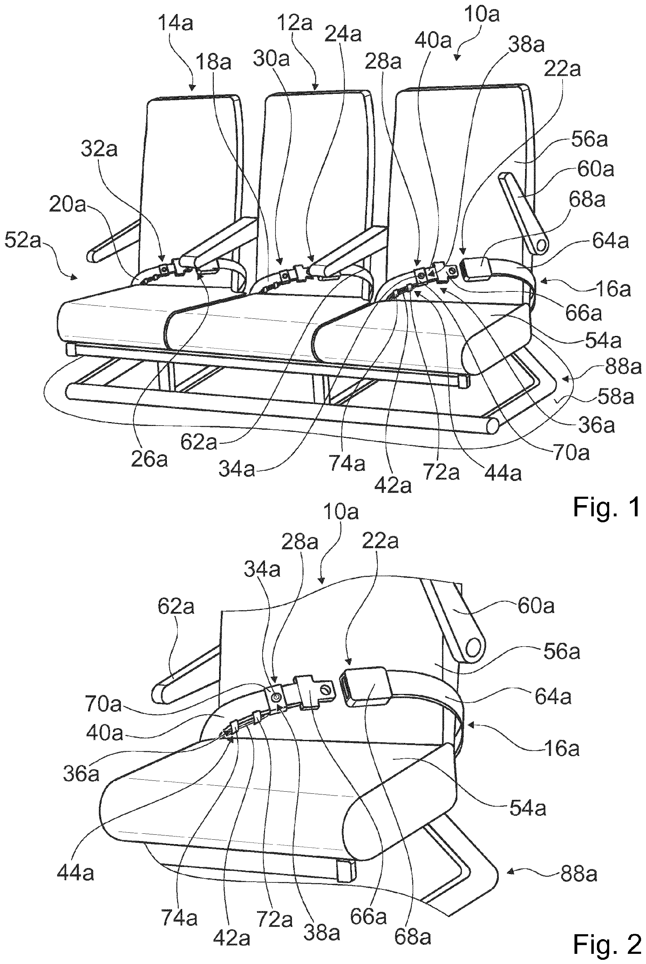

Figur 1 und 2 zeigen eine erfindungsgemäße Sitzvorrichtung in einem ersten Ausführungsbeispiel. Die Sitzvorrichtung umfasst einen ersten Sitz 10a. Die Sitzvorrichtung umfasst weiter einen zweiten Sitz 12a und einen dritten Sitz 14a. Die Sitze 10a, 12a, 14a sind zusammen als eine Sitzreihe 52a ausgebildet. Die Sitze 10a, 12a, 14a sind als Fluggastsitze ausgebildet. Die Sitze 10a, 12a, 14a sind in einer nicht näher dargestellten Flugzeugkabine eines Flugzeugs aufgeständert. Dazu weisen die Sitze 10a, 12a, 14a eine Aufständereinheit 88a auf, die die Sitze 10a, 12a, 14a zusammen auf einem Kabinenboden 58a der Flugzeugkabine aufständert. Grundsätzlich ist es auch denkbar, dass die Sitze 10a, 12a, 14a jeweils einzeln aufgeständert sind. Die als Fluggastsitze ausgebildeten Sitze 10a, 12a, 14a sind im Wesentlichen gleich ausgebildet, weswegen im Folgenden lediglich der Sitz 10a näher beschrieben wird. Der als Fluggastsitz ausgebildete Sitz 10a weist einen Sitzboden 54a und eine schwenkbar mit dem Sitzboden 54a gekoppelte Rückenlehne 56a auf. Dabei ist der Sitz 10a zwischen einer TTL-Position und einer Komfortposition verstellbar. Die TTL-Position stellt dabei eine aufrechte Sitzposition dar, in der die Rückenlehne 56a im Wesentlichen orthogonal und der Sitzboden 54a im Wesentlichen parallel zu dem Kabinenboden 58a ausgerichtet ist. Die Komfortposition stellt eine geneigte Sitzposition dar, in der die Rückenlehne 56a und der Sitzboden 54a schräg zu dem Kabinenboden 58a ausgerichtet sind. Dabei werden die Rückenlehne 56a und der Sitzboden 54a bei einer Verstellung zwischen der TTL-Position und der Ruheposition zueinander und zu dem Kabinenboden 58a verschwenkt. Dabei können der Sitzboden 54a und die Rückenlehne 56a verstellt werden oder jeweils lediglich nur der Sitzboden 54a oder die Rückenlehne 56a. Grundsätzlich ist es auch denkbar, dass die Sitze jeweils eine Beinauflage aufweisen, die ebenfalls zwischen der TTL-Position und der Komfortposition verstellbar ist. Dabei ist der Sitz 10a stufenlos zwischen der TTL-Position und der Komfortposition verstellbar. Zur Sitzverstellung des Sitzes 10a zwischen der TTL-Position und der Komfortposition weist der Sitz 10a eine nicht näher dargestellte Verstellmechanik auf. Die Verstellmechanik ist als eine Reclinekinematik ausgebildet. Über die Verstellmechanik sind der Sitzboden 54a und die Rückenlehne 56a miteinander gekoppelt. Die Verstellmechanik umfasst ein Federelement. Das Federelement ist als eine stufenlos verstellbare Gasdruckfeder ausgebildet. In einem unbetätigten Zustand sperrt das als Gasdruckfeder ausgebildete Federelement die Verstellmechanik, wodurch der Sitzboden 54a und die Rückenlehne 56a in der entsprechenden Stellung, in der sie gerade zueinander stehen, verriegelt sind. In einem betätigten Zustand entsperrt das als Gasdruckfeder ausgebildete Federelement die Verstellmechanik, wodurch der Sitzboden 54a und die Rückenlehne 56a von einem auf dem Sitz 10a sitzenden Passagier verstellt werden können. Dabei kann der Passagier bei entriegelter Verstellmechanik durch Gewichtsverlagerung den Sitz 10a verstellen und die Rückenlehne 56a zu dem Sitzboden 54a verschwenken. Weiter umfasst der Sitz 10a jeweils seitlich neben dem Sitzboden 54a angeordnete Armlehnen 60a, 62a. Die Armlehnen 60a, 62a sind jeweils schwenkbar mit nicht näher dargestellten Sitzteilern des Sitzes 10a verbunden.

Zur Sicherung von auf den Sitzen 10a, 12a, 14a sitzenden Passagieren weist die Sitzvorrichtung jeweils einen Sitzgurt 16a, 18a, 20a auf. Die Sitzgurte 16a, 18a, 20a sind jeweils fest mit dem jeweiligen Sitz 10a, 12a, 14a verbunden. Die Sitzgurte 16a, 18a, 20a überspannen in einem geschlossenen Zustand den jeweiligen Sitzboden 54a des entsprechenden Sitzes 10a, 12a, 14a. Zum Öffnen und Schließen der Sitzgurte 16a, 18a, 20a weist jeder Sitzgurt 16a, 18a, 20a jeweils eine Funktionsöffnungs- und Schließeinheit 22a, 24a, 26a auf. Im Folgenden soll lediglich der Sitzgurt 16a mit seiner Funktionsöffnungs- und Schließeinheit 22a, der dem Sitz 10a zugeordnet ist, näher beschrieben werden. Die restlichen Sitzgurte 18a, 20a der Sitze 12a, 14a sind mit ihren Funktionsöffnungs- und Schließeinheiten 24a, 26a im Wesentlichen identisch ausgebildet. Der Sitzgurt 16a ist aus einem reißfesten Gewebe gebildet. Grundsätzlich ist es auch denkbar, dass der Sitzgurt 16a aus einem anderen, dem Fachmann als sinnvoll erscheinenden Material gebildet ist. Der Sitzgurt 16a weist eine erste fixe Seite 40a und eine zweite variable Seite 64a auf. In einem geschlossenen Zustand sind die fixe Seite 40a und die variable Seite 64a des Sitzgurts 16a über die Funktionsöffnungs- und Schließeinheit 22a fest miteinander verbunden. Die fixe Seite 40a des Sitzgurts 16a ist mit einem ersten Ende fest mit dem Sitz 10a verbunden. Dabei kann über eine Anbindung der fixen Seite 40a des Sitzgurts 16a eine Kraft in den Sitz 10a beziehungsweise dessen Aufständereinheit 88a übertragen werden. Die Funktionsöffnungs- und Schließeinheit 22a umfasst ein erstes Verbindungselement 66a und ein zweites Verbindungselement 68a, die zum Schließen des Sitzgurts 16a zu einer festen Verbindung miteinander vorgesehen sind. Das erste Verbindungselement 66a ist fest mit einem zweiten Ende der ersten fixen Seite 40a des Sitzgurts 16a verbunden. Das erste Verbindungselement 66a ist mittels eines Formschlusses fest mit dem zweiten Ender der ersten fixen Seite 40a des Sitzgurts 16a verbunden. Dabei ist eine Länge der ersten fixen Seite 40a des Sitzgurts 16a unveränderbar. Die Länge der fixen Seite 40a, also ein Abstand zwischen dem ersten Ende, an dem die fixe Seite 40a mit dem Sitz 10a verbunden ist, und dem zweiten Ende, an dem das erste Verbindungselement 66a mit der fixen Seite 40a verbunden ist, kann nicht verstellt werden und ist fix. Die variable Seite 64a des Sitzgurts 16a ist mit einem ersten Ende fest mit dem Sitz 10a verbunden. Dabei ist das erste Ende der variablen Seite 64a auf einer Seite des Sitzbodens 54a angeordnet, die der Seite, an der das erste Ende der fixen Seite 40a angebunden ist, gegenüberliegt. An der variablen Seite 64a ist das zweite Verbindungselement 68a der Funktionsöffnungs- und Schließeinheit 22a angebunden. Dabei ist das zweite Verbindungselement 68a der Funktionsöffnungs- und Schließeinheit 22a verschiebbar entlang des Sitzgurts 16a angeordnet. Durch die verschiebbare Anordnung des zweiten Verbindungselements 68a der Funktionsöffnungs- und Schließeinheit 22a an der zweiten Seite 64a ist eine Länge der zweiten Seite 64a variabel. Ein Abstand zwischen dem ersten Ende der zweiten Seite 64a und dem zweiten Verbindungselement 68a der Funktionsöffnungs- und Schließeinheit 22a ist variabel und kann händisch von einem Passagier eingestellt werden.

Die Sitzvorrichtung umfasst je Sitz 10a, 12a, 14a eine Funktionseinheit 28a, 30a, 32a. Jede Funktionseinheit 28a, 30a, 32a ist jeweils dem entsprechenden, als Fluggastsitz ausgebildeten Sitz 10a, 12a, 14a zugeordnet. Die Funktionseinheiten 28a, 30a, 32a sind dabei jeweils differierend von der entsprechenden Funktionsöffnungs- und Schließeinheit 22a, 24a, 26a des entsprechenden Sitzgurts 16a, 18a, 20a des jeweiligen Sitzes 10a, 12a, 14a ausgebildet. Die Funktionseinheiten 28a, 30a, 32a sind von den jeweiligen Funktionsöffnungs- und Schließeinheit 22a, 24a, 26a des entsprechenden Sitzgurts 16a, 18a, 20a getrennt ausgebildet und tragen nicht zum Öffnen und Schließen des entsprechenden Sitzgurts 16a, 18a, 20a bei. Die Funktionseinheiten 28a, 30a, 32a sind dabei an den Sitzgurt 16a, 18a, 20a des entsprechenden Sitzes 10a, 12a, 14a angebunden. Dabei sind die Funktionseinheiten 28a, 30a, 32a jeweils mit dem entsprechenden Sitzgurt 16a, 18a, 20a verbunden. Die Funktionseinheiten 28a, 30a, 32a sind dabei formschlüssig mit dem jeweiligen Sitzgurt 16a, 18a, 20a verbunden. Im Folgenden soll hier lediglich die Funktionseinheit 28a und deren Anbindung an den Sitzgurt 16a des Sitzes 10a näher beschreiben werden. Die restlichen Funktionseinheiten 30a, 32a sind im Wesentlichen gleich ausgebildet und jeweils auf eine gleiche Weise mit dem entsprechenden Sitzgurt 18a, 20a verbunden. Die folgende Beschreibung kann deshalb auf diese angewendet werden.

Die Funktionseinheit 28a ist als eine Bedieneinheit ausgebildet. Über die als Bedieneinheit ausgebildete Funktionseinheit 28a kann ein auf dem Sitz 10a sitzender Passagier zumindest einen Teil einer Funktion des Sitzes 10a, der als Fluggastsitz ausgebildet ist, bedienen. Die als Bedieneinheit ausgebildete Funktionseinheit 28a umfasst ein Bedienelement 34a. Das Bedienelement 34a ist zu einer Betätigung durch eine Person, insbesondere durch den auf dem Sitz 10a sitzenden Passagier vorgesehen. Das Bedienelement 34a ist als ein mechanischer Druckknopf ausgebildet. Das Bedienelement 34a ist als ein Reclinebutton 38a ausgebildet. Über das als Reclinebutton 38a ausgebildete Bedienelement 34a kann eine Reclinefunktion des Sitzes 10a bedient werden. Über das Bedienelement 34a ist die nicht näher dargestellte Verstellmechanik zur Verstellung des Sitzes 10a betätigt. Während das Bedienelement 34a betätigt ist, ist die nicht näher dargestellte Verstellmechanik entriegelt und der Sitz 10a kann verstellt werden. Während das Bedienelement 34a unbetätigt ist, ist die nicht näher dargestellte Verstellmechanik verriegelt und der Sitz 10a ist in der entsprechenden Stellung verriegelt.

Die Funktionseinheit 28a umfasst eine Haltevorrichtung 36a. Die Haltevorrichtung 36a bindet das Bedienelement 34a der Funktionseinheit 28a in einem montierten Zustand an den Sitzgurt 16a an. Die Haltevorrichtung 36a ist dabei verschiebbar mit dem Sitzgurt 16a verbunden. Die Haltevorrichtung 36a umfasst einen Grundkörper 70a. Der Grundkörper 70a ist aus einem Kunststoff gebildet. Der Grundkörper 70a weist einen rechteckigen Querschnitt mit abgerundeten Kanten auf. Grundsätzlich ist es auch denkbar, dass der Grundkörper 70a einen anderen Querschnitt, wie beispielsweise einen ovalen Querschnitt, aufweist. Dabei ist der Grundkörper 70a ringförmig ausgebildet. Der Grundkörper 70a der Haltevorrichtung 36a umschließt den Sitzgurt 16a dabei in einer Ebene komplett. Der Sitzgurt 16a ist in einem montierten Zustand durch eine Öffnung des Grundkörpers 70a geführt. In einem montierten Zustand ist der Grundkörper 70a und damit die Haltevorrichtung 36a nicht von dem Sitzgurt 16a zu trennen. Dazu weist der Sitzgurt 16a an seinem zweiten Ende, an dem das erste Verbindungselement 66a angebracht ist, ein Sperrelement auf, das ein weiteres Verschieben des Grundkörpers 70a und damit ein Lösen des Grundkörpers 70a von dem Sitzgurt 16a verhindert. Dabei ist das Sperrelement von dem Verbindungselement 66a gebildet. Grundsätzlich ist es auch denkbar, dass das Sperrelement als ein separates Element gebildet ist, wie beispielsweise als ein mit dem Sitzgurt 16a verbundenes Stiftelement oder eine auf den Sitzgurt 16a aufgebrachte Erhöhung. Durch das Sperrelement kann die Haltevorrichtung 36a an dem zweiten Ende nicht von dem Sitzgurt 16a rutschen. An dem ersten Ende, an dem der Sitzgurt 16a mit dem Sitz 10a verbunden ist, kann die Haltevorrichtung 36a auch nicht von dem Sitzgurt 16a rutschen. Dabei ist die Haltevorrichtung 36a an einer fixen Seite 40a des Sitzgurts 16a angeordnet. Grundsätzlich wäre es auch denkbar, dass die Haltevorrichtung 36a an der variablen Seite 64a angeordnet ist. Dabei wäre ein Mehraufwand dahingehend nötig, dass die Haltevorrichtung 36a bei einer Verstellung des Sitzgurts 16a auf dem Sitzgurt 16a verschoben werden müsste und mit der Haltevorrichtung 36a angebundene Elemente sich mit bewegen müssten. Der Grundkörper 70a umschließt die fixe Seite 40a des Sitzgurts 16a. Dabei kann der Grundkörper 70a und damit die Haltevorrichtung 36a auf der fixen Seite 40a des Sitzgurts 16a verschoben werden. Grundsätzlich wäre es auch denkbar, dass die Haltevorrichtung 36a zum Teil von einem Verbindungselement 66a, 68a der Funktionsöffnungs- und Schließeinheit 22a gebildet wird. Dabei wäre das Bedienelement 34a an der Funktionsöffnungs- und Schließeinheit 22a angebunden, hätte allerdings keinerlei Einfluss auf ein Öffnen oder Schließen des Sitzgurts 16a mittels der Funktionsöffnungs- und Schließeinheit 22a.

Die Funktionseinheit 28a umfasst ein Übertragungselement 42a. Das Übertragungselement 42a ist zur Kopplung des Bedienelements 34a mit einem auszulösenden Element, insbesondere dem auszulösenden Element der Verstellmechanik, vorgesehen. Das Übertragungselement 42a koppelt das Bedienelement 34a mit dem als Gasdruckfeder ausgebildeten Federelement der Verstellmechanik. Das Übertragungselement 42a gibt eine Betätigungskraft, die auf das Bedienelement 34a ausgeübt wird an das als Gasdruckfeder ausgebildete Federelement weiter und entsperrt dieses in einem betätigten Zustand. Das Übertragungselement 42a ist als ein Bowdenzug ausgebildet. Das als Bowdenzug ausgebildete Übertragungselement 42a weist ein Drahtseil auf, das zur Übertragung einer Zugkraft vorgesehen ist, das von einer in Verlaufsrichtung stabilen Hülle umgeben ist. Zur Anbindung des Übertragungselements 42a an den Sitzgurt 16a weist die Funktionseinheit 28a eine Führung 44a auf. Die Führung 44a bindet das Übertragungselement 42a fest an den Sitzgurt 16a an. Dabei ist die Führung 44a als ein von dem Sitzgurt 16a getrennt ausgebildetes Führungselement ausgebildet, das an den Sitzgurt 16a angebunden ist. Die Führung 44a umfasst hierbei mehrere Formschlusselemente 72a, 74a, die fest mit dem Sitzgurt 16a verbunden sind. Die Formschlusselemente 72a, 74a der Führung 44a nehmen in einem montierten Zustand das Übertragungselement 42a formschlüssig auf. Die Formschlusselemente 72a, 74a sind dabei jeweils als eine geschlossene Schlaufe ausgebildet, durch die das Übertragungselement 42a geführt ist. Grundsätzlich ist es auch denkbar, dass die Formschlusselemente 72a, 74a auf eine andere, dem Fachmann als sinnvoll erscheinende Weise zur Anbindung des Übertragungselements 42a ausgebildet sind. Grundsätzlich ist es auch denkbar, dass die Führung 44a weitere Formschlusselemente 72a, 74a aufweist oder dass die Führung 44a lediglich von einem Formschlusselement gebildet wird, das das Übertragungselement 42a über eine gesamte Erstreckung an den Sitzgurt 16a anbindet.

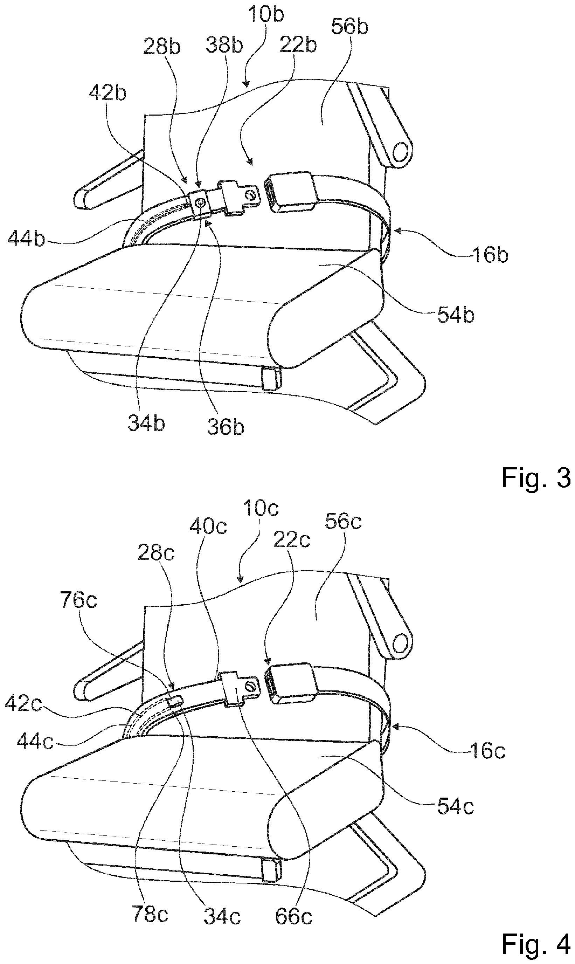

In den Figuren 3 bis 8 sind sechs weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 und 2, verwiesen werden kann. Zur Unterscheidung der Ausführungsbeispiele ist der Buchstabe a den Bezugszeichen des Ausführungsbeispiels in den Fig. 1 und 2 nachgestellt. In den Ausführungsbeispielen der Fig. 3 bis 8 ist der Buchstabe a durch die Buchstaben b bis g ersetzt.

Figur 3 zeigt eine erfindungsgemäße Sitzvorrichtung in einem zweiten Ausführungsbeispiel. Die Sitzvorrichtung umfasst einen ersten Sitz 10b. Der Sitz 10b ist in einer nicht näher dargestellten Flugzeugkabine eines Flugzeugs aufgeständert. Der als Fluggastsitz ausgebildete Sitz 10b weist einen Sitzboden 54b und eine schwenkbar mit dem Sitzboden 54b gekoppelte Rückenlehne 56b auf. Dabei ist der Sitz 10b zwischen einer TTL-Position und einer Komfortposition verstellbar. Zur Sitzverstellung des Sitzes 10b zwischen der TTL-Position und der Komfortposition weist der Sitz 10b eine nicht näher dargestellte Verstellmechanik auf. Die Verstellmechanik umfasst ein Federelement. Das Federelement ist als eine Gasdruckfeder ausgebildet. Zur Sicherung von einem auf dem Sitz 10b sitzenden Passagier weist die Sitzvorrichtung einen Sitzgurt 16b auf. Der Sitzgurt 16b ist fest mit dem Sitz 10b verbunden. Der Sitzgurt 16b überspannt in einem geschlossenen Zustand den Sitzboden 54b des Sitzes 10b. Zum Öffnen und Schließen des Sitzgurts 16b weist der Sitzgurt 16b eine Funktionsöffnungs- und Schließeinheit 22b auf. Die Sitzvorrichtung umfasst je Sitz 10b eine Funktionseinheit 28b. Die Funktionseinheit 28b ist dem entsprechenden, als Fluggastsitz ausgebildeten Sitz 10b zugeordnet. Die Funktionseinheit 28b ist dabei differierend von der entsprechenden Funktionsöffnungs- und Schließeinheit 22b des Sitzgurts 16b des Sitzes 10b ausgebildet. Die Funktionseinheit 28b ist dabei an den Sitzgurt 16b des Sitzes 10b angebunden. Die Funktionseinheit 28b ist als eine Bedieneinheit ausgebildet. Über die als Bedieneinheit ausgebildete Funktionseinheit 28b kann ein auf dem Sitz 10b sitzender Passagier zumindest einen Teil einer Funktion des Sitzes 10b, der als Fluggastsitz ausgebildet ist, bedienen. Die als Bedieneinheit ausgebildete Funktionseinheit 28b umfasst ein Bedienelement 34b. Das Bedienelement 34b ist zu einer Betätigung durch eine Person, insbesondere durch den auf dem Sitz 10b sitzenden Passagier, vorgesehen. Das Bedienelement 34b ist als ein mechanischer Druckknopf ausgebildet. Das Bedienelement 34b ist ebenfalls als ein Reclinebutton 38b ausgebildet. Die Funktionseinheit 28b ist zu einem großen Teil gleich ausgebildet wie die Funktionseinheit aus dem ersten Ausführungsbeispiel.

Die Funktionseinheit 28b umfasst eine Haltevorrichtung 36b. Die Haltevorrichtung 36b bindet das Bedienelement 34b der Funktionseinheit 28b in einem montierten Zustand an den Sitzgurt 16b an. Dabei ist die Haltevorrichtung 36b im Unterschied zu dem ersten Ausführungsbeispiel ortsfest an dem Sitzgurt 16b angebunden. Die Haltevorrichtung 36b ist dabei nicht verschiebbar an dem Sitzgurt 16b angebunden. Die Funktionseinheit 28b umfasst ein Übertragungselement 42b. Das Übertragungselement 42b ist zur Kopplung des Bedienelements 34b mit einem auszulösenden Element, insbesondere dem auszulösenden Element der Verstellmechanik, vorgesehen. Das Übertragungselement 42b ist wie in dem ersten Ausführungsbeispiel als ein Bowdenzug ausgebildet. Zur Anbindung des Übertragungselements 42b an den Sitzgurt 16b weist die Funktionseinheit 28b eine Führung 44b auf. Die Führung 44b bindet das Übertragungselement 42b fest an den Sitzgurt 16b an.

Im Unterschied zu dem ersten Ausführungsbeispiel ist die Führung 44b als in den Sitzgurt 16b integriertes Führungselement ausgebildet. Die Führung 44b ist einstückig mit dem Sitzgurt 16b ausgebildet. Dabei ist die Führung 44b als in den Sitzgurt 16b eingearbeitete Tasche ausgebildet. Die Führung 44b ist dabei an einer Seite des Sitzgurts 16b angeordnet. Dabei ist es beispielsweise auch denkbar, dass ein Schlauchelement in den Sitzgurt 16b eingenäht ist und so die in den Sitzgurt 16b integrierte Führung 44b ausbildet. Durch die in den Sitzgurt 16b integrierte Führung 44b kann das Übertragungselement 42b besonders vorteilhaft an dem Sitzgurt 16b angebracht werden. Das in der Führung 44b angeordnete Übertragungselement 42 ist nicht störend an dem Sitzgurt 16b angeordnet. Durch die integrierte Führung 44b ist das Übertragungselement 42b sicher an dem Sitzgurt 16b angeordnet. Einem versehentlichen Beschädigen des Übertragungselements 42b durch einen Passagier wird dadurch vorteilhaft entgegengewirkt.

Figur 4 zeigt eine erfindungsgemäße Sitzvorrichtung in einem dritten Ausführungsbeispiel. Die Sitzvorrichtung umfasst einen ersten Sitz 10c. Der Sitz 10c ist in einer nicht näher dargestellten Flugzeugkabine eines Flugzeugs aufgeständert. Der als Fluggastsitz ausgebildete Sitz 10c weist einen Sitzboden 54c und eine schwenkbar mit dem Sitzboden 54c gekoppelte Rückenlehne 56c auf. Dabei ist der Sitz 10c zwischen einer TTL-Position und einer Komfortposition verstellbar. Zur Sitzverstellung des Sitzes 10c zwischen der TTL-Position und der Komfortposition weist der Sitz 10c eine nicht näher dargestellte Verstellmechanik auf. Die Verstellmechanik umfasst ein Federelement. Das Federelement ist als eine Gasdruckfeder ausgebildet. Zur Sicherung von einem auf dem Sitz 10c sitzenden Passagier weist die Sitzvorrichtung einen Sitzgurt 16c auf. Der Sitzgurt 16c ist fest mit dem Sitz 10c verbunden. Der Sitzgurt 16c überspannt in einem geschlossenen Zustand den Sitzboden 54c des Sitzes 10c. Zum Öffnen und Schließen des Sitzgurts 16c weist der Sitzgurt 16c eine Funktionsöffnungs- und Schließeinheit 22c auf. Die Sitzvorrichtung umfasst je Sitz 10c eine Funktionseinheit 28c. Die Funktionseinheit 28c ist dem entsprechenden, als Fluggastsitz ausgebildeten Sitz 10c zugeordnet. Die Funktionseinheit 28c ist dabei differierend von der entsprechenden Funktionsöffnungs- und Schließeinheit 22c des Sitzgurts 16c des Sitzes 10c ausgebildet. Die Funktionseinheit 28c ist dabei an den Sitzgurt 16c des Sitzes 10c angebunden. Die Funktionseinheit 28c ist als eine Bedieneinheit ausgebildet. Über die als Bedieneinheit ausgebildete Funktionseinheit 28c kann ein auf dem Sitz 10c sitzender Passagier zumindest einen Teil einer Funktion des Sitzes 10c, der als Fluggastsitz ausgebildet ist, bedienen.

Die Funktionseinheit 28c umfasst ein Bedienelement 34c. Das Bedienelement 34c ist zu einer Betätigung durch eine Person, insbesondere durch den auf dem Sitz 10c sitzenden Passagier, vorgesehen. Mittels des Bedienelements 34c kann von dem Passagier die nicht näher dargestellte Verstellmechanik des Sitzes 10c bedient werden. Das Bedienelement 34c ist dabei als ein Zugelement ausgebildet. Zur Betätigung der Verstellmechanik, also zum Entriegeln des Sitzes 10c zur Verstellung des Sitzbodens 54c zu der Rückenlehne 56c, kann von einem Passagier eine Zugkraft auf das als Zugelement ausgebildete Bedienelement 34c ausgeübt werden. Die Funktionseinheit 28c umfasst ein Übertragungselement 42c, das die Zugkraft von dem als Zugelement ausgebildeten Bedienelement 34c an die Verstellmechanik weiterleitet. Dabei ist das Übertragungselement 42c einstückig mit dem als Zugelement ausgebildeten Bedienelement 34c ausgebildet. Das Übertragungselement 42c ist von einem Gewebeband 76c gebildet. Dabei ist es beispielsweise denkbar, dass das Gewebeband 76c aus einem gleichen Gewebe gebildet ist wie der Sitzgurt 16c. Grundsätzlich ist es natürlich auch denkbar, dass das Gewebeband 76c aus einem anderen, insbesondere aus einem weniger reißfesten Gewebe gebildet ist als der Sitzgurt 16c. An einem ersten Ende ist das Gewebeband 76c mit der Verstellmechanik verbunden. An einem zweiten Ende bildet das Gewebeband 76c eine Schlaufe aus, die das als Zugelement ausgebildete Bedienelement 34c ausbildet. Grundsätzlich ist es auch denkbar, dass das als Zugelement ausgebildete Bedienelement 34c von einem anders ausgebildeten Element gebildet ist, das von einem Passagier ergriffen werden kann, um an ihm zu ziehen, wie beispielsweise als ein Haken oder ein Ringelement, das fest mit dem Gewebeband 76c verbunden ist. Dabei ist es zusätzlich denkbar, dass das als Zugelement ausgebildete Bedienelement 34c farblich abgesetzt ist, sodass dieses leicht von einem Passagier erkannt werden kann. So ist es beispielsweise denkbar, dass das Gewebeband 76c in dem Bereich, in dem es die Schlaufe ausbildet, eine Signalfarbe, beispielsweise Rot, aufweist.

Zur Anbindung des Übertragungselements 42c und des Bedienelements 34c an den Sitzgurt 16c weist die Funktionseinheit 28c eine Führung 44c auf. Die Führung 44c bindet das Übertragungselement 42c fest an den Sitzgurt 16c an. Die Führung 44c ist als in den Sitzgurt 16c integriertes Führungselement ausgebildet. Die Führung 44c ist einstückig mit dem Sitzgurt 16c ausgebildet. Dabei ist die Führung 44c als in den Sitzgurt 16c eingearbeitete Tasche ausgebildet. Die Führung 44c ist dabei mittig in dem Sitzgurt 16c angeordnet. Das Gewebeband 76c ist im Wesentlichen in der Führung 44c angeordnet. Mit der Schlaufe, die das Bedienelement 34c der Funktionseinheit 28c ausbildet, ragt das Gewebeband 76c aus einer Öffnung 78c in der Führung 44c. Die Öffnung 78c der Führung 44c, durch die die Schlaufe des Gewebebands 76c ragt, die das Bedienelement 34c ausbildet, ist dabei an einem Ende einer fixen Seite 40c des Sitzgurts 16c angeordnet, die einem Verbindungselement 66c der Funktionsöffnungs- und Schließeinheit 22c zugewandt ist. Zur Betätigung der Verstellmechanik und dadurch zur Verstellung des Sitzes 10c kann ein Passagier das als Schlaufe des Gewebebands 76c ausgebildete Bedienelement 34c greifen und daran ziehen, um so eine Zugkraft auf die Verstellmechanik auszuüben und dann durch Gewichtsverlagerung den Sitz 10c zu verstellen. Grundsätzlich ist es auch denkbar, dass die Führung 44c von einer Manschette gebildet ist, die über den Sitzgurt 16c gezogen ist. Dabei ist es denkbar, dass die Manschette beispielsweise aus einem Silikon gebildet ist. Die Manschette wäre dabei vorzugsweise über die komplette Länge der fixen Seite des Sitzgurts 16c geführt. Die Manschette würde den Sitzgurt 16c dabei komplett umschließen. Dabei wäre die Führung 44c in die Manschette integriert, wodurch der Sitzgurt 16c im Vergleich zu einem aus dem Stand der Technik bekannten Sitzgurt unverändert bleiben könnte.

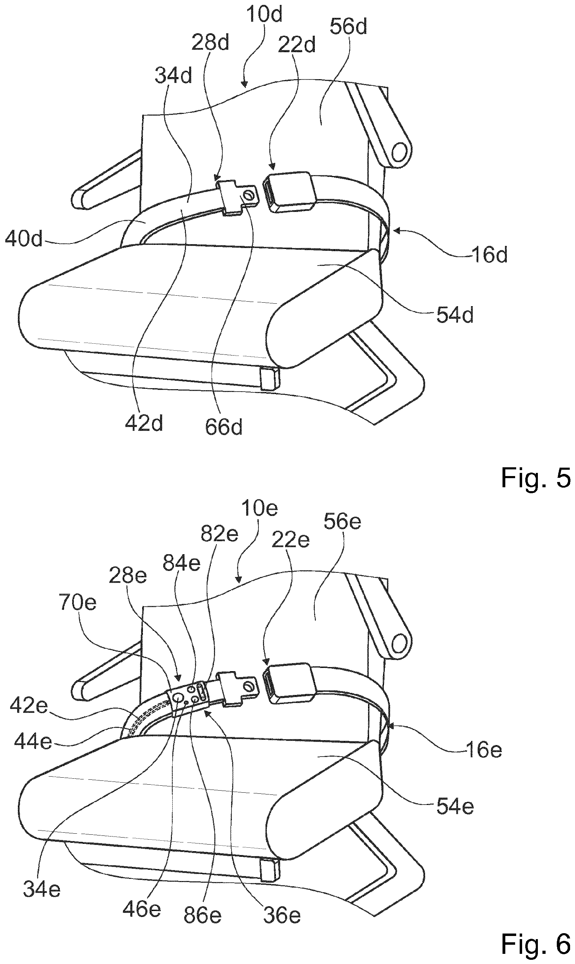

Figur 5 zeigt eine erfindungsgemäße Sitzvorrichtung in einem vierten Ausführungsbeispiel. Die Sitzvorrichtung umfasst einen ersten Sitz 10d. Der Sitz 10d ist in einer nicht näher dargestellten Flugzeugkabine eines Flugzeugs aufgeständert. Der als Fluggastsitz ausgebildete Sitz 10d weist einen Sitzboden 54d und eine schwenkbar mit dem Sitzboden 54d gekoppelte Rückenlehne 56d auf. Dabei ist der Sitz 10d zwischen einer TTL-Position und einer Komfortposition verstellbar. Zur Sitzverstellung des Sitzes 10d zwischen der TTL-Position und der Komfortposition weist der Sitz 10d eine nicht näher dargestellte Verstellmechanik auf. Die Verstellmechanik umfasst ein Federelement. Das Federelement ist als eine Gasdruckfeder ausgebildet. Zur Sicherung von einem auf dem Sitz 10d sitzenden Passagier weist die Sitzvorrichtung einen Sitzgurt 16d auf. Der Sitzgurt 16d ist fest mit dem Sitz 10d verbunden. Der Sitzgurt 16d überspannt in einem geschlossenen Zustand den Sitzboden 54d des Sitzes 10d. Zum Öffnen und Schließen des Sitzgurts 16d weist der Sitzgurt 16d eine Funktionsöffnungs- und Schließeinheit 22d auf. Die Sitzvorrichtung umfasst je Sitz 10d eine Funktionseinheit 28d. Die Funktionseinheit 28d ist dem entsprechenden, als Fluggastsitz ausgebildeten Sitz 10d zugeordnet. Die Funktionseinheit 28d ist dabei differierend von der entsprechenden Funktionsöffnungs- und Schließeinheit 22d des Sitzgurts 16d des Sitzes 10d ausgebildet. Die Funktionseinheit 28d ist dabei an den Sitzgurt 16d des Sitzes 10d angebunden. Die Funktionseinheit 28d ist als eine Bedieneinheit ausgebildet. Über die als Bedieneinheit ausgebildete Funktionseinheit 28d kann ein auf dem Sitz 10d sitzender Passagier zumindest einen Teil einer Funktion des Sitzes 10d, der als Fluggastsitz ausgebildet ist, bedienen.

Die Funktionseinheit 28d umfasst ein Bedienelement 34d. Das Bedienelement 34d ist zu einer Betätigung durch eine Person, insbesondere durch den auf dem Sitz 10d sitzenden Passagier vorgesehen. Mittels des Bedienelements 34d kann von dem Passagier die nicht näher dargestellte Verstellmechanik des Sitzes 10d bedient werden. Das Bedienelement 34d ist dabei als ein Zugelement ausgebildet. Zur Betätigung der Verstellmechanik, also zum Entriegeln des Sitzes 10d zur Verstellung des Sitzbodens 54d zu der Rückenlehne 56d, kann von einem Passagier eine Zugkraft auf das als Zugelement ausgebildete Bedienelement 34d ausgeübt werden. Die Funktionseinheit 28d umfasst ein Übertragungselement 42d, das die Zugkraft von dem als Zugelement ausgebildeten Bedienelement 34d an die Verstellmechanik weiterleitet. Dabei ist das Übertragungselement 42d einstückig mit dem als Zugelement ausgebildeten Bedienelement 34d und dem Sitzgurt 16d ausgebildet. Der Sitzgurt 16d bildet einstückig das Bedienelement 34d und das Übertragungselement 42d aus. Dabei bildet eine fixe Seite 40d des Sitzgurts 16d das Bedienelement 34d und das Übertragungselement 42d einstückig aus. Die fixe Seite 40d des Sitzgurts 16d ist dazu mit einem ersten Ende direkt mit der Verstellmechanik verbunden. An einem zweiten Ende weist die fixe Seite 40d des Sitzgurts 16d ein Verbindungselement 66d auf. Zur Betätigung der Verstellmechanik und dadurch zur Verstellung des Sitzes 10d kann ein Passagier die fixe Seite 40d des Sitzgurts 16d greifen und daran ziehen, um so eine Zugkraft auf die Verstellmechanik auszuüben und dann durch Gewichtsverlagerung den Sitz 10d zu verstellen.

Figur 6 zeigt eine Sitzvorrichtung in einem fünften Ausführungsbeispiel. Die Sitzvorrichtung umfasst einen ersten Sitz 10e. Der Sitz 10e ist in einer nicht näher dargestellten Flugzeugkabine eines Flugzeugs aufgeständert. Der als Fluggastsitz ausgebildete Sitz 10e weist einen Sitzboden 54e und eine schwenkbar mit dem Sitzboden 54e gekoppelte Rückenlehne 56e auf. Dabei ist der Sitz 10e zwischen einer TTL-Position und einer Komfortposition verstellbar. Zur Sitzverstellung des Sitzes 10e zwischen der TTL-Position und der Komfortposition weist der Sitz 10e eine nicht näher dargestellte Verstellmechanik auf. Die Verstellmechanik umfasst ein Sperrmodul, das die Verstellmechanik verriegeln kann, um den Sitz 10e in einer Stellung zu verriegeln, oder die Verstellmechanik freigeben kann, sodass der Sitz 10e zwischen der TTL-Position und der Komfortposition verstellt werden kann. Das Sperrmodul ist dabei als ein elektrisch betätigbares Modul ausgebildet. Dazu umfasst das Sperrmodul ein elektro-magnetisches Sperrelement. Grundsätzlich ist es auch denkbar, dass das Sperrmodul ein anderes elektrisch und/oder elektronisch ansteuerbares Sperrelement aufweist. Zur Sicherung von einem auf dem Sitz 10e sitzenden Passagier weist die Sitzvorrichtung einen Sitzgurt 16e auf. Der Sitzgurt 16e ist fest mit dem Sitz 10e verbunden. Der Sitzgurt 16e überspannt in einem geschlossenen Zustand den Sitzboden 54e des Sitzes 10e. Zum Öffnen und Schließen des Sitzgurts 16e weist der Sitzgurt 16e eine Funktionsöffnungs- und Schließeinheit 22e auf. Die Sitzvorrichtung umfasst je Sitz 10e eine Funktionseinheit 28e. Die Funktionseinheit 28e ist dem entsprechenden, als Fluggastsitz ausgebildeten Sitz 10e zugeordnet. Die Funktionseinheit 28e ist dabei differierend von der entsprechenden Funktionsöffnungs- und Schließeinheit 22e des Sitzgurts 16e des Sitzes 10e ausgebildet. Die Funktionseinheit 28e ist dabei an den Sitzgurt 16e des Sitzes 10e angebunden. Die Funktionseinheit 28e ist als eine Bedieneinheit ausgebildet. Über die als Bedieneinheit ausgebildete Funktionseinheit 28e kann ein auf dem Sitz 10e sitzender Passagier zumindest einen Teil einer Funktion des Sitzes 10e, der als Fluggastsitz ausgebildet ist, bedienen.

Die Funktionseinheit 28e umfasst ein erstes Bedienelement 34e. Das Bedienelement 34e ist als ein elektrisches Bedienelement ausgebildet. Das als elektrisches Bedienelement ausgebildete Bedienelement 34e ist zur Ansteuerung des Sperrmoduls der Verstellmechanik vorgesehen. Zur Kopplung des als elektrisches Bedienelement ausgebildeten Bedienelements 34e mit der Verstellmechanik weist die Funktionseinheit 28e ein Übertragungselement 42e auf. Das Übertragungselement 42e ist als ein elektrisches Kabel ausgebildet. Das Übertragungselement 42e ist dabei elektrisch mit dem Bedienelement 34e und der Verstellmechanik gekoppelt. Wird das Bedienelement 34e von einem Passagier betätigt, wird ein elektrisches Signal an das Sperrmodul der Verstellmechanik übertragen und die Verstellmechanik und damit der Sitz 10e werden entriegelt und können von dem Passagier verstellt werden. Ist das Bedienelement 34e unbetätigt wird kein elektrisches Signal an die Verstellmechanik übertragen und der Sitz 10e ist verriegelt.

Die Funktionseinheit 28e weist weitere Bedienelemente 82e, 84e, 86e auf. Die Bedienelemente 82e, 84e, 86e sind ebenfalls als elektrische Bedienelemente ausgebildet. Die als elektrische Bedienelemente ausgebildeten Bedienelemente 82e, 84e, 86e sind dazu vorgesehen eine Sitzelektronik des Sitzes 10e anzusteuern. Über die Bedienelemente 82e, 84e, 86e kann ein Passagier die Sitzelektronik des Sitzes 10e bedienen. Das Bedienelement 82e ist als ein Wippenschalter ausgebildet. Über das als Wippenschalter ausgebildete Bedienelement 82e kann eine Lautstärkeregelung für ein Entertainmentsystem des Sitzes 10e bedient werden. Das Bedienelement 84e ist als elektrischer Druckknopf ausgebildet. Über das Bedienelement 84e kann das Entertainmentsystem des Sitzes 10e bedient werden. Dabei können durch Drücken des Bedienelements 84e verschiedene Funktionen des Entertainmentsystems, wie beispielsweise verschiedene Audio- und/oder Videoprogramme, durchgewechselt werden. Das Bedienelement 86e ist als ein Serviceknopf ausgebildet. Durch Drücken des als Serviceknopf ausgebildeten Bedienelements 86e kann der Passagier ein Servicemitglied eines Flugzeugs zu sich bitten. Die weiteren Bedienelemente 82e, 84e, 86e sind über das Übertragungselement 42e mit einer Sitzelektronik des Sitzes 10e gekoppelt. Dazu weist das als elektrisches Kabel ausgebildete Übertragungselement 42e mehrere Leiter auf. Grundsätzlich ist es auch denkbar, dass die weiteren Bedienelemente 82e, 84e, 86e andere elektrische und/oder elektronische Funktionen des Sitzes 10e ansteuern, wie beispielsweise eine elektrische Sitzverstellung. Grundsätzlich ist es auch denkbar, dass die Funktionseinheit 28e weitere Bedienelemente aufweist, die als elektrische Bedienelemente ausgebildet sind und zur elektrischen und/oder elektronischen Steuerung des Sitzes 10e vorgesehen sind. Die Funktionseinheit 28e umfasst weiter ein Steckerelement 46e. Das Steckerelement 46e ist als ein Audioanschluss ausgebildet. Über das Steckerelement 46e kann ein Passagier Audioausgabegeräte, wie beispielsweise Kopfhörer, anschließen. Das Steckerelement 46e ist dabei über das als Kabel ausgebildete Übertragungselement 42e an die Sitzelektronik angeschlossen. Grundsätzlich ist es auch denkbar, dass das Steckerelement 46e als ein anders ausgebildetes Steckerelement ausgebildet ist, wie beispielsweise als ein USB-Anschluss. Dabei ist es grundsätzlich auch denkbar, dass die Funktionseinheit 28e mehrere unterschiedlich ausgebildete Steckerelemente 46e aufweist.

Die Funktionseinheit 28e weist eine Haltevorrichtung 36e auf. Die Haltevorrichtung 36e ist an dem Sitzgurt 16e angebunden. Dabei ist die Haltevorrichtung 36e fix an dem Sitzgurt 16e angebunden. Grundsätzlich ist es auch denkbar, dass die Haltevorrichtung 36e verschiebbar auf dem Sitzgurt 16e angeordnet ist. Die Haltevorrichtung 36e umfasst einen Grundkörper 70e, der den Sitzgurt 16e in einem montierten Zustand umschließt. Die Haltevorrichtung 36e ist dazu vorgesehen, die Bedienelemente 34e, 82e, 84e, 86e und das Steckerelement 46e an den Sitzgurt 16e anzubinden. Dazu sind die Bedienelemente 34e, 82e, 84e, 86e und das Steckerelement 46e in den Grundkörper 70e der Haltevorrichtung 36e eingelassen. Zur Anbindung des Übertragungselements 42e an den Sitzgurt 16e weist die Funktionseinheit 28e eine Führung 44e auf. Die Führung 44e bindet das Übertragungselement 42e fest an den Sitzgurt 16e an. Die Führung 44e ist dabei in den Sitzgurt 16e integriert.

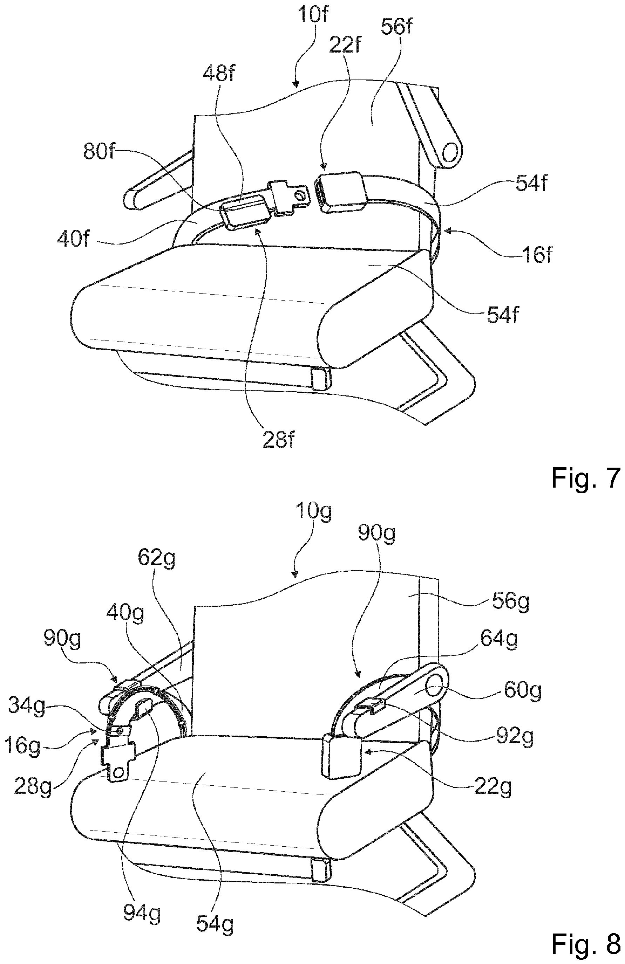

Figur 7 zeigt eine erfindungsgemäße Sitzvorrichtung in einem sechsten Ausführungsbeispiel. Die Sitzvorrichtung umfasst einen ersten Sitz 10f. Der Sitz 10f ist in einer nicht näher dargestellten Flugzeugkabine eines Flugzeugs aufgeständert. Der als Fluggastsitz ausgebildete Sitz 10f weist einen Sitzboden 54f und eine schwenkbar mit dem Sitzboden 54f gekoppelte Rückenlehne 56f auf. Dabei ist der Sitz 10f zwischen einer TTL-Position und einer Komfortposition verstellbar. Zur Sitzverstellung des Sitzes 10f zwischen der TTL-Position und der Komfortposition weist der Sitz 10f eine nicht näher dargestellte Verstellmechanik auf. Die Verstellmechanik umfasst ein Federelement. Das Federelement ist als eine Gasdruckfeder ausgebildet. Zur Sicherung von einem auf dem Sitz 10f sitzenden Passagier weist die Sitzvorrichtung einen Sitzgurt 16f auf. Der Sitzgurt 16f ist fest mit dem Sitz 10f verbunden. Der Sitzgurt 16f überspannt in einem geschlossenen Zustand den Sitzboden 54f des Sitzes 10f. Zum Öffnen und Schließen des Sitzgurts 16f weist der Sitzgurt 16f eine Funktionsöffnungs- und Schließeinheit 22f auf. Die Sitzvorrichtung umfasst je Sitz 10f eine Funktionseinheit 28f. Die Funktionseinheit 28f ist dem entsprechenden als Fluggastsitz ausgebildeten Sitz 10f zugeordnet. Die Funktionseinheit 28f ist dabei differierend von der entsprechenden Funktionsöffnungs- und Schließeinheit 22f des Sitzgurts 16f des Sitzes 10f ausgebildet. Die Funktionseinheit 28f ist dabei an den Sitzgurt 16f des Sitzes 10f angebunden. Die Funktionseinheit 28f umfasst ein Stauelement 48f. Das Stauelement 48f ist dazu vorgesehen, dass ein Passagier Elemente, insbesondere kleinere Elemente, wie beispielsweise Handys, Musikwiedergabegeräte, Stifte oder Ähnliches, anordnen kann. Das Stauelement 48f ist dabei als eine Tasche ausgebildet. Das als Tasche ausgebildete Stauelement 48f ist fest mit dem Sitzgurt 16f verbunden. Das Stauelement 48f ist dabei mit dem Sitzgurt 16f vernäht. Grundsätzlich ist es auch denkbar, dass das Stauelement 48f mittels einer anderen Weise mit dem Sitzgurt 16f verbunden ist, beispielsweise über eine Klebeverbindung. Das Stauelement 48f umfasst eine Schließeinheit 80f. Die Schließeinheit 80f ist dazu vorgesehen, das Stauelement 48f zu verschließen. Die Schließeinheit 80f ist dabei von einem Reißverschluss gebildet. Grundsätzlich ist es auch denkbar, dass die Schließeinheit 80f auf eine andere, dem Fachmann als sinnvoll erscheinende Weise ausgebildet ist, und beispielsweise einen Klettverschluss oder Knöpfe aufweist. Das Stauelement 48f ist dabei auf einer fixen Seite 40f des Sitzgurts 16f angeordnet. Grundsätzlich ist es auch denkbar, dass das Stauelement 48f auf einer variablen Seite 64f des Sitzgurts 16f angeordnet ist. Dabei ist es grundsätzlich auch denkbar, dass die Funktionseinheit 28f weitere Stauelemente 48f umfasst, die wahlweise auf der fixen Seiten 40f und/oder der variablen Seite 64f des Sitzgurts 16f angeordnet sein können.

Figur 8 zeigt eine erfindungsgemäße Sitzvorrichtung in einem siebten Ausführungsbeispiel. Die Sitzvorrichtung umfasst einen ersten Sitz 10g. Der Sitz 10g ist in einer nicht näher dargestellten Flugzeugkabine eines Flugzeugs aufgeständert. Der als Fluggastsitz ausgebildete Sitz 10g weist einen Sitzboden 54g und eine schwenkbar mit dem Sitzboden 54g gekoppelte Rückenlehne 56g auf. Dabei ist der Sitz 10g zwischen einer TTL-Position und einer Komfortposition verstellbar. Zur Sitzverstellung des Sitzes 10g zwischen der TTL-Position und der Komfortposition weist der Sitz 10g eine nicht näher dargestellte Verstellmechanik auf. Weiter umfasst der Sitz 10g jeweils seitlich neben dem Sitzboden 54g angeordnete Armlehnen 60g, 62g. Die Armlehnen 60g, 62g sind jeweils schwenkbar mit nicht näher dargestellten Sitzteilern des Sitzes 10g verbunden. Die Armlehnen 60g, 62g sind dabei jeweils seitlich der Rückenlehne 56g angeordnet. Zur Sicherung von einem auf dem Sitz 10g sitzenden Passagier weist die Sitzvorrichtung einen Sitzgurt 16g auf. Der Sitzgurt 16g ist fest mit dem Sitz 10g verbunden. Der Sitzgurt 16g überspannt in einem geschlossenen Zustand den Sitzboden 54g des Sitzes 10g. Zum Öffnen und Schließen des Sitzgurts 16g weist der Sitzgurt 16g eine Funktionsöffnungs- und Schließeinheit 22g auf. Der Sitzgurt 16g weist eine erste fixe Seite 40g und eine zweite variable Seite 64g auf. In einem geschlossenen Zustand sind die fixe Seite 40g und die variable Seite 64g des Sitzgurts 16a über die Funktionsöffnungs- und Schließeinheit 22g fest miteinander verbunden. Die Sitzvorrichtung umfasst je Sitz 10g eine Funktionseinheit 28g. Die Funktionseinheit 28g ist dem entsprechenden, als Fluggastsitz ausgebildeten Sitz 10g zugeordnet. Die Funktionseinheit 28g ist dabei differierend von der entsprechenden Funktionsöffnungs- und Schließeinheit 22g des Sitzgurts 16g des Sitzes 10g ausgebildet. Die Funktionseinheit 28g ist dabei an den Sitzgurt 16g des Sitzes 10g angebunden. Die Funktionseinheit 28g ist als eine Bedieneinheit ausgebildet. Über die als Bedieneinheit ausgebildete Funktionseinheit 28g kann ein auf dem Sitz 10g sitzender Passagier zumindest einen Teil einer Funktion des Sitzes 10g, der als Fluggastsitz ausgebildet ist, bedienen. Die als Bedieneinheit ausgebildete Funktionseinheit 28g umfasst ein Bedienelement 34g. Das Bedienelement 34g ist zu einer Betätigung durch eine Person, insbesondere durch den auf dem Sitz 10g sitzenden Passagier, vorgesehen. Das Bedienelement 34g ist als ein mechanischer Druckknopf ausgebildet. Das Bedienelement 34g ist ebenfalls als ein Reclinebutton 38g ausgebildet. Die Funktionseinheit 28g ist zu einem großen Teil gleich ausgebildet wie die Funktionseinheit aus dem ersten Ausführungsbeispiel.

Im Unterschied zu den vorhergehenden Ausführungsbeispielen umfasst die Sitzvorrichtung eine Sitzgurthaltevorrichtung 90g. Über die Sitzgurthaltevorrichtung 90g kann der Sitzgurt 16g bei Nichtgebrauch in einer nicht störenden Position an dem Sitz 10g befestigt werden. Dabei können die erste fixe Seite 40g und die zweite variable Seite 64g unabhängig voneinander an dem Sitz 10g angebunden werden. Zur Anbindung der ersten fixen Seite 40g und der zweiten variablen Seite 64g des Sitzgurts 16g weist die Sitzgurthaltevorrichtung 90g jeweils ein Halteelement 92g, 94g auf. Ein Halteelement 92g, 94g ist dabei jeweils fest an der Armlehne 60g, 62g angebunden. Die Halteelemente 92g, 94g sind dabei als einfache Formschlusselemente, mit denen jeweils eine Seite des Sitzgurts 16g verbunden werden kann, ausgebildet. Die Halteelemente 92g, 94g sind dabei als Haken ausgebildet, in die die jeweilige Seite 40g, 64g des Sitzgurts 16g eingehängt werden kann. Die als Haken ausgebildeten Halteelemente 92g, 94g sind dabei jeweils an einer Innenseite der Armlehnen 60g, 62g angeordnet. Grundsätzlich wäre es auch denkbar, dass die Halteelemente 92g, 94g an einer Unterseite oder einer Außenseite der jeweiligen Armlehne 60g, 62g angeordnet sind. Grundsätzlich ist es auch denkbar, dass die Halteelemente 92g, 94g in einer anderen, dem Fachmann als sinnvoll erscheinenden Weise ausgebildet sind. Dabei ist es denkbar, dass die Halteelemente 92g, 94g als anders ausgebildete Formschlusselemente, wie beispielsweise als Klipselemente, ausgebildet sind. Grundsätzlich ist es auch denkbar, dass die Halteelemente 92g, 94g von Klettverschlusselementen oder magnetischen Halteelementen gebildet sind, die an den Armlehnen 60g, 62g angebracht sind. Über die Halteelemente 92g, 94g können die Seiten 40g, 64g des Sitzgurts 16g bei Nichtgebrauch an den Armlehnen 60g, 62g angebunden werden, sodass ein Passagier insbesondere die fixe Seite 40g, an die die Funktionseinheit 28g angebunden ist, leicht und intuitiv erreichen kann, um den Sitz 10g zu verstellen.

### Bezugszeichen

- 10: Sitz
- 12: Sitz
- 14: Sitz
- 16: Sitzgurt
- 18: Sitzgurt
- 20: Sitzgurt
- 22: Funktionsöffnungs- und Schließeinheit
- 24: Funktionsöffnungs- und Schließeinheit
- 26: Funktionsöffnungs- und Schließeinheit
- 28: Funktionseinheit
- 30: Funktionseinheit
- 32: Funktionseinheit
- 34: Bedienelement
- 36: Haltevorrichtung
- 38: Reclinebutton
- 40: fixe Seite
- 42: Übertragungselement
- 44: Führung
- 46: Steckerelement
- 48: Stauelement
- 52: Sitzreihe
- 54: Sitzboden
- 56: Rückenlehne
- 58: Kabinenboden
- 60: Armlehne
- 62: Armlehne
- 64: variable Seite
- 66: Verbindungselement
- 68: Verbindungselement
- 70: Grundkörper
- 72: Formschlusselement
- 74: Formschlusselement
- 76: Gewebeband
- 78: Öffnung
- 80: Schließeinheit
- 82: Bedienelement
- 84: Bedienelement
- 86: Bedienelement
- 88: Aufständereinheit
- 90: Sitzgurthaltevorrichtung
- 92: Halteelement
- 94: Halteelement

## Patentansprüche

1. Sitzvorrichtung mit einem Sitz (10a, 12a, 14a; 10b; 10c; 10d; 10f; 10g), insbesondere einem Fluggastsitz, mit einem Sitzgurt (16a, 18a, 20a; 16b; 16c; 16d; 16f; 16g) und mit wenigstens einer von einer Funktionsöffnungs- und Schließeinheit (22a, 24a, 26a; 22b; 22c; 22d; 22f; 22g) des Sitzgurts (16a, 18a, 20a; 16b; 16c; 16d; 16f; 16g) zumindest im Wesentlichen differierenden Funktionseinheit (28a, 30a, 32a; 28b; 28c; 28d; 28f; 28g), wobei die wenigstens eine Funktionseinheit (28a, 30a, 32a; 28b; 28c; 28d; 28f; 28g) zumindest an den Sitzgurt (16a, 18a, 20a; 16b; 16c; 16d; 16f; 16g) angebunden und/oder zumindest teilweise in diesen integriert ist, wobei die wenigstens eine Funktionseinheit (28a, 30a, 32a; 28b; 28c; 28d; 28g) als eine Bedieneinheit ausgebildet ist, die wenigstens ein Bedienelement (34a; 34b; 34c; 34d) umfasst, **dadurch gekennzeichnet, dass** die wenigstens eine Funktionseinheit (28a; 28b; 28c; 28d) wenigstens ein Übertragungselement (42a; 42b; 42c; 42d) zur Kopplung des Bedienelements (34a; 34b; 34c) mit einem auszulösenden Element aufweist, wobei das Übertragungselement mit dem Sitzgurt (16a; 16b; 16c; 16d) gekoppelt ist, und als Kraft- und/oder Bewegungsübertragungselement vorgesehen ist, um eine Bedienkraft zur Betätigung des auszulösenden Elements zu übertragen und um eine entsprechende Reaktion auszulösen und/oder auszuführen.

2. Sitzvorrichtung nach Anspruch 1, **dadurch gekennzeichnet, dass** die wenigstens eine Funktionseinheit (28a, 30a, 32a; 28b; 28c) eine Haltevorrichtung (36a; 36b; 36c) aufweist, die die Funktionseinheit (28a, 30a, 32a; 28b; 28c) an den Sitzgurt (16a, 18a, 20a; 16b; 16c) anbindet.

3. Sitzvorrichtung nach Anspruch 2, **dadurch gekennzeichnet, dass** die Haltevorrichtung (36a; 36c) verschiebbar mit dem Sitzgurt (16a, 18a, 20a; 16c) verbunden ist.

4. Sitzvorrichtung nach Anspruch 2 oder 3, **dadurch gekennzeichnet, dass** die Haltevorrichtung (36a; 36b; 36c) an einer fixen Seite (40a; 40b; 40c) des Sitzgurts (16a, 18a, 20a; 16b; 16c; 16d) angeordnet ist.

5. Sitzvorrichtung zumindest nach Anspruch 2, **dadurch gekennzeichnet, dass** die Haltevorrichtung (36b) fix an dem Sitzgurt (16b) angebunden ist.

6. Sitzvorrichtung nach Anspruch 1, **dadurch gekennzeichnet, dass** die wenigstens eine Funktionseinheit (28a; 28b; 28c; 28d) wenigstens eine Führung (44a; 44b; 44c; 44d) aufweist, die das Übertragungselement (42a; 42b; 42c; 42d) an den Sitzgurt (16a; 16b; 16c; 16d) anbindet.

7. Sitzvorrichtung nach Anspruch 6, **dadurch gekennzeichnet, dass** die Führung (44a) als ein von dem Sitzgurt (16a) getrennt ausgebildetes Führungselement ausgebildet ist, das an den Sitzgurt (16a) angebunden ist.

8. Sitzvorrichtung zumindest nach Anspruch 7, **dadurch gekennzeichnet, dass** die Führung (44b; 44c; 44d) als in den Sitzgurt (16b; 16c; 16d) integriertes Führungselement ausgebildet ist.

9. Sitzvorrichtung nach einem der vorhergehenden Ansprüche, **dadurch gekennzeichnet, dass** das Bedienelement (34c) als ein Zugelement ausgebildet ist.

10. Sitzvorrichtung nach einem der vorhergehenden Ansprüche, **dadurch gekennzeichnet, dass** das Bedienelement (34a) als ein mechanischer Druckknopf ausgebildet ist.

11. Sitzvorrichtung nach einem der vorhergehenden Ansprüche, **dadurch gekennzeichnet, dass** der Sitzgurt (16d) das Bedienelement (34d) und das Übertragungselement (42d) einstückig ausbildet und zur Auslösung einer Sitzverstellung vorgesehen ist.

12. Sitzvorrichtung zumindest nach Anspruch 1, **dadurch gekennzeichnet, dass** das Bedienelement (34a; 34b) zur Betätigung einer Sitzverstellung vorgesehen ist.

13. Sitzvorrichtung nach einem der vorhergehenden Ansprüche, **dadurch gekennzeichnet, dass** die Funktionseinheit (30c) wenigstens ein Steckerelement (46c) umfasst.

14. Sitzvorrichtung nach einem der vorhergehenden Ansprüche, **dadurch gekennzeichnet, dass** die Funktionseinheit (28f) wenigstens ein Stauelement (48f) umfasst.

## Claims

1. Seat device with a seat (10a, 12a, 14a; 10b; 10c; 10d; 10f; 10g), in particular a flight passenger seat, with a seat belt (16a, 18a, 20a; 16b; 16c; 16d; 16f; 16g) and with at least one functional unit (28a, 30a, 32a; 28b; 28c; 28d; 28f; 28g) which at least substantially differs from an opening and closing unit (22a, 24a, 26a; 22b; 22c; 22d; 22f; 22g) of the seat belt (16a, 18a, 20a; 16b; 16c; 16d; 16f; 16g),
wherein the at least one functional unit (28a, 30a, 32a; 28b; 28c; 28d; 28f; 28g) is connected at least to the seat belt (16a, 18a, 20a; 16b; 16c; 16d; 16f; 16g) and/or is at least partly integrated in the seat belt (16a, 18a, 20a; 16b; 16c; 16d; 16f; 16g),
wherein the at least one functional unit (28a, 30a, 32a; 28b; 28c; 28d; 28g) is embodied as an operating unit comprising at least one operating element (34a; 34b; 34c; 34d), **characterised in that** the at least one functional unit (28a; 28b; 28c; 28d) comprises at least one transfer element (42a; 42b; 42c; 42d) for a coupling of the operating element (34a; 34b; 34c) with an element that is to be actuated, wherein the transfer element is coupled with the seat belt (16a; 16b; 16c; 16d) and is, as a force and/or movement transfer element, configured to transfer an operating force for actuating the element that is to be actuated and is configured to actuate and/or execute a corresponding reaction.

2. Seat device according to claim 1, **characterised in that** the at least one functional unit (28a, 30a, 32a; 28b; 28c) comprises a holding device (36a; 36b; 36c) connecting the functional unit (28a, 30a, 32a; 28b; 28c) to the seat belt (16a, 18a, 20a; 16b; 16c).

3. Seat device according to claim 2, **characterised in that** the holding device (36a; 36c) is connected to the seat belt (16a, 18a, 20a; 16c) in such a way that it is displaceable.

4. Seat device according to claim 2 or 3, **characterised in that** the holding device (36a; 36b; 36c) is arranged on a fixed side (40a; 40b; 40c) of the seat belt (16a, 18a, 20a; 16b; 16c; 16d).

5. Seat device at least according to claim 2, **characterised in that** the holding device (36b) is fixedly connected to the seat belt (16b).

6. Seat device according to claim 1, **characterised in that** the at least one functional unit (28a; 28b; 28c; 28d) comprises at least one guidance (44a; 44b; 44c; 44d) connecting the transfer element (42a; 42b; 42c; 42d) to the seat belt (16a; 16b; 16c; 16d).

7. Seat device according to claim 6, **characterised in that** the guidance (44a) is embodied as a guiding element which is implemented separate from the seat belt (16a) and is connected to the seat belt (16a).

8. Seat device at least according to claim 7, **characterised in that** the guidance (44b; 44c; 44d) is embodied as a guiding element which is integrated in the seat belt (16b; 16c; 16d).

9. Seat device at least according to one of the preceding claims, **characterised in that** the operating element (34c) is embodied as a pull element.

10. Seat device according to one of the preceding claims, **characterised in that** the operating element (34a) is embodied as a mechanical push button.

11. Seat device according to one of the preceding claims, **characterised in that** the seat belt (16d) embodies the operating element (34d) and the transfer element (42d) in a one-part implementation and is configured for actuating a seat adjustment.

12. Seat device at least according to claim 1, **characterised in that** the operating element (34a; 34b) is configured for actuating a seat adjustment.

13. Seat device according to one of the preceding claims, **characterised in that** the functional unit (30c) comprises at least one plug element (46c).

14. Seat device according to one of the preceding claims, **characterised in that** the functional unit (28f) comprises at least one stowage element (48f).

## Revendications

1. Dispositif de siège avec un siège (10a, 12a, 14a ; 10b ; 10c ; 10d ; 10f ; 10g), notamment un siège de passager d'avion, avec une ceinture de sécurité (16a, 18a, 20a ; 16b ; 16c ; 16d ; 16f ; 16g) et avec au moins une unité fonctionnelle (28a, 30a, 32a ; 28b ; 28c ; 28d ; 22f ; 28g) au moins sensiblement différente d'une unité d'ouverture et fermeture (22a, 24a, 26a ; 22b, 22c ; 22d ; 22f ; 22g) de la ceinture de sécurité (16a, 18a, 20a ; 16b ; 16c ; 16d ; 16f ; 16g),
l'au moins une unité fonctionnelle (28a, 30a, 32a ; 28b ; 28c ; 28d ; 22f ; 28g) étant raccordée au moins à la ceinture de sécurité (16a, 18a, 20a ; 16b ; 16c ; 16d ; 16f ; 16g) et/ou au moins partiellement intégrée dans celui-ci,
l'au moins une unité fonctionnelle (28a, 30a, 32a ; 28b ; 28c ; 28d ; 28g) étant réalisée comme unité de commande comprenant au moins un élément de commande (34a ; 34b ; 34c ; 34d),
**caractérisé en ce que**
l'au moins une unité fonctionnelle (28a ; 28b ; 28c ; 28d) comporte au moins un élément de transfert (42a ; 42b ; 42c ; 42d) pour un couplement de l'élément de commande (34a ; 34b ; 34c) avec un élément à déclencher,
l'élément de transfert étant couplé avec la ceinture de sécurité (16a ; 16b ; 16c ; 16d) et étant prévu, comme élément à transmission de force et/ou de mouvement, pour transférer une force de commande pour une activation de l'élément à déclencher ainsi que pour déclencher et/ou exécuter une réaction correspondante.

2. Dispositif de siège selon la revendication 1, **caractérisé en ce que** l'au moins une unité fonctionnelle (28a, 30a, 32a ; 28b ; 28c) comporte un dispositif de retenue (36a ; 36b ; 36c) raccordant l'unité fonctionnelle (28a, 30a, 32a ; 28b ; 28c) à la ceinture de sécurité (16a, 18a, 20a ; 16b ; 16c).

3. Dispositif de siège selon la revendication 2, **caractérisé en ce que** le dispositif de retenue (36a ; 36c) est raccordé avec la ceinture de sécurité (16a, 18a, 20a ; 16c) de manière déplaçable.

4. Dispositif de siège selon l'une quelconque des revendications 2 ou 3, **caractérisé en ce que** le dispositif de retenue (36a ; 36b ; 36c) est disposé sur un côté fixé (40a ; 40b ; 40c) de la ceinture de sécurité (16a, 18a, 20a ; 16b ; 16c ; 16d).

5. Dispositif de siège au moins selon la revendication 2, **caractérisé en ce que** le dispositif de retenue (36b) est fixement raccordé à la ceinture de sécurité (16b).

6. Dispositif de siège selon la revendication 1, **caractérisé en ce que** l'au moins une unité fonctionnelle (28a ; 28b ; 28c ; 28d) comporte au moins un guidage (44a ; 44b ; 44c ; 44d) raccordant l'élément de transfert (42a ; 42b ; 42c ; 42d) à la ceinture de sécurité (16a ; 16b ; 16c ; 16d).

7. Dispositif de siège selon la revendication 6, **caractérisé en ce que** le guidage (44a) est implémenté comme élément de guidage réalisé séparément de la ceinture de sécurité (16a) et raccordé à la ceinture de sécurité (16a).

8. Dispositif de siège au moins selon la revendication 7, **caractérisé en ce que** le guidage (44b ; 44c ; 44d) est implémenté comme élément de guidage intégré dans la ceinture de sécurité (16b ; 16c ; 16d).

9. Dispositif de siège selon l'une quelconque des revendications précédentes, **caractérisé en ce que** l'élément de commande (34c) est implémenté comme élément de tension.

10. Dispositif de siège selon l'une quelconque des revendications précédentes, **caractérisé en ce que** l'élément de commande (34a) est implémenté comme bouton poussoir mécanique.

11. Dispositif de siège selon l'une quelconque des revendications précédentes, **caractérisé en ce que** la ceinture de sécurité (16d) implémente, intégralement, l'élément de commande (34d) et l'élément de transfert (42d) et que ladite ceinture de sécurité (16d) est prévue pour un déclenchement d'un ajustement de siège.

12. Dispositif de siège au moins selon la revendication 1, **caractérisé en ce que** l'élément de commande (34a ; 34b) est prévu pour une actuation d'un ajustement de siège.

13. Dispositif de siège selon l'une quelconque des revendications précédentes, **caractérisé en ce que** l'unité fonctionnelle (30c) comporte au moins un élément fiche mâle (46c).

14. Dispositif de siège selon l'une quelconque des revendications précédentes, **caractérisé en ce que** l'unité fonctionnelle (28f) comporte au moins un élément de rangement (18f).
